# EUROPÄISCHE PATENTSCHRIFT

(11) **EP 3 743 775 B1**
(45) Veröffentlichungstag und Bekanntmachung des Hinweises auf die Patenterteilung: **23.11.2022**
(21) Anmeldenummer: 19702228.8
(22) Anmeldetag: 24.01.2019
(51) Int. Cl.: G05B 15/02, G05B 19/042, A47C 20/08, A47C 31/00, G06F 3/16, A47C 20/00, G10L 15/22

(54) **STEUEREINRICHTUNG FÜR EINEN MÖBELANTRIEB UND VERFAHREN ZUM STEUERN EINES MÖBELANTRIEBS**
CONTROL DEVICE FOR A FURNITURE DRIVE AND METHOD FOR CONTROLLING A FURNITURE DRIVE
DISPOSITIF DE COMMANDE POUR UN ENTRAÎNEMENT DE MEUBLE ET PROCÉDÉ DE COMMANDE D'UN ENTRAÎNEMENT DE MEUBLE

(30) Priorität: 26.01.2018 DE 102018101822; 13.04.2018 DE 102018108866
(43) Veröffentlichungstag der Anmeldung: 02.12.2020
(73) Patentinhaber: DewertOkin Technology Group Co., Ltd., Jiaxing City, Zhejiang Province (CN)
(72) Erfinder: HILLE, Armin, 33659 Bielefeld (DE)
(74) Vertreter: Kleine, Hubertus
(86) Internationale Anmeldenummer: PCT/EP2019/051780
(87) Internationale Veröffentlichungsnummer: WO 2019/145440

(56) Entgegenhaltungen:
- DE-U1-202016 105 634
- US-A- 5 335 313
- US-A1- 2008 262 657

## Beschreibung

Die Erfindung betrifft ein Verfahren zum Steuern eines Möbelantriebs durch eine Spracheingabe, wobei der Möbelantrieb eine Steuereinrichtung aufweist, an die zumindest ein Verstellantrieb anschließbar ist. Die Erfindung betrifft weiterhin eine Steuereinrichtung für einen Möbelantrieb zur Durchführung des Verfahrens.

Die Druckschrift DE 43 15 210 C2 beschreibt ein Verfahren zur Steuerung einer Verstelleinrichtung eines Möbelantriebs durch eine Spracheingabe. Spracheingaben werden dabei erfasst und in Abhängigkeit von verschiedenen Betriebsarten mit Vergleichsmustern verglichen, wobei je Betriebsart und eine Auswahlentscheidung zwischen höchstens zwei zulässigen Vergleichsmustern erforderlich ist. Durch die Reduzierung auf nur zwei Alternativen in jeder Betriebsart wird die Auswertung der Spracheingabe, die Sprachanalyse, technisch vereinfacht. Die Bedienung des Möbelantriebs wird jedoch verkompliziert, da die Spracheingabe nicht die Nutzung natürlicher Kommunikationsmuster und -strukturen erlaubt.

In der Druckschrift US 5,335,313 A ist eine Sprachsteuerung zur Ansteuerung einer Verstelleinrichtung eines Krankenhausbettes beschrieben, die Teil eines umfassenden Sprachsteuerungssystems in einem Krankenzimmer ist. Über dieses System können neben dem Verstellen des Bettes verschiedene Funktionen wie z.B. Telefonieren, Einschalten von Licht und Geräten, Absetzen eines Pfleger- bzw. Schwesternrufs, ausgeführt werden. Zur Auswertung der Spracheingabe wir ein handelsüblicher Personalcomputer eingesetzt, was angesichts der unterschiedlichen möglichen Funktionen angemessen sein kann, nur für die Steuerung des Möbelantriebs jedoch zu aufwändig wäre.

Gemäß der Druckschrift US 2008/0262657 A1 ist ein Möbelantrieb drahtgebunden oder drahtlos mit einer Handbedieneinheit gekoppelt, die eine Steuerung eines Verstellantriebs über eine manuelle Tastenbetätigung oder über Spracheingaben erlaubt. Von der Handbedieneinheit empfangene Sprachsignale werden an eine Steuereinrichtung des Möbelantriebs übertragen und dort ausgewertet. Ob und wie eine Priorisierung der unterschiedlichen Eingabemöglichkeiten vorgenommen wird, ist nicht offenbart.

Die Druckschrift DE 20 2016 105 634 U1 beschreibt eine Kopplung eines Sensors zur Erfassung von Vibrationen, Bewegung und/oder Schall, der an einem elektrisch verstellbaren Schlaf- oder Ruhemöbel angeordnet ist, mit einer Steuereinrichtung des Möbelantriebs. Die von dem Sensor aufgenommenen Signale werden zur Bestimmung von physiologischen Parametern, wie z.B. einer Herz- oder Atemfrequenz, über die Steuereinrichtung in Form von Daten an eine externe Komponente übertragen.

Die in den letzten Jahren enorm gewachsene Leistungsfähigkeit von Computern und Computernetzen hat inzwischen zur Nutzung von Sprachsteuerung in vielen Anwendungsgebieten geführt. Nicht zuletzt sind inzwischen Systeme bekannt, beispielsweise "Google Assistant" der Firma Google Inc. oder "Alexa Voice Service" der Amazon Europe Core S.á.r.l., die umfangreiche Sprachein- und -ausgaben über bereitgestellte Schnittstellen (API - Application Programming Interface) ermöglichen, wobei Spracheingaben über eine Netzwerkverbindung an einen sich in einem Rechnernetzwerk (Cloud) befindenden Auswertecomputer (Server) versendet werden, dort bearbeitet werden und ausgewertet beispielsweise in Form von erkanntem Text wieder über das Netzwerk an den Absender der Anfrage gesendet werden. Mit dieser extern (von der Anwendung aus betrachtet) ausgewerteten Spracheingabe kann auf relativ einfache Weise eine Sprachsteuerung für Geräte umgesetzt werden.

Eine Verwendung einer derartigen externen Sprachauswertung durch die Steuereinrichtung eines Möbelantriebs erlaubt eine komfortable Spracheingabe, die beispielsweise auch dann verstanden wird, wenn die gesprochene Sprache nicht einer strikt vorgegebenen Syntax folgt.

Bei Möbelantrieben im Allgemeinen und insbesondere im Pflege- oder Hospitalbereich sind jedoch strikte Sicherheitsanforderungen zu erfüllen. Bei bewegten Möbelteilen besteht beispielsweise eine Einklemmgefahr, die ein schnelles und sicheres Reagieren der Steuereinrichtung auf Anforderungen zu einer Notabschaltung gewährleistet. Bei einer Nutzung netzwerkbasierter Dienste zur Spracherkennung ist das geforderte Sicherheitsniveau nicht erreichbar. Beispielsweise kann eine selbst kurzzeitige Netzwerkstörung oder -verzögerung in der Übertragung dazu führen, dass ein sicherheitsrelevantes Kommando nicht oder nur so verzögert erkannt wird, dass eine Personengefährdung nicht auszuschließen ist.

Es ist daher eine Aufgabe der vorliegenden Erfindung, einen Möbelantrieb zu schaffen, der auch beim Einsatz einer Sprachsteuerung jederzeit einfach in einem sicheren Zustand gebracht werden kann. Es ist eine weitere Aufgabe, ein Verfahren zum Steuern eines Möbelantriebs mit den genannten Eigenschaften bereit zu stellen.

Diese Aufgabe wird gelöst durch einen Möbelantrieb und ein Verfahren zum Steuern eines Möbelantriebs mit den Merkmalen des jeweiligen unabhängigen Anspruchs. Vorteilhafte Ausgestaltungen und Weiterbildungen sind Gegenstand der jeweiligen abhängigen Ansprüche.

Ein erfindungsgemäßes Verfahren der eingangs genannten Art umfasst die folgenden Schritte:
Umwandeln eines akustischen Signals in ein elektrisches Signal;
Auswerten des elektrischen Signals durch mindestens eine lokale Sprachanalyseeinrichtung; und
Steuern eines Betriebszustands des Möbelantriebs, wenn bei der Auswertung ein Schlüsselwort aus einer Menge von Schlüsselwörtern erkannt wird.

Dabei ist die Steuereinrichtung zudem zum drahtgebundenen oder drahtlosen Empfang von Steuerbefehlen für den mindestens einen Verstellantrieb von einer Handsteuerung eingerichtet und/oder weist eine Schnittstellenvorrichtung für mindestens eine externe Sprachanalyseeinrichtung auf, wobei die mindestens eine lokale Sprachanalyseeinrichtung mit einer Priorität auf den mindestens einen Verstellantrieb wirkt, die höher ist als die der Handsteuerung und/oder der externen Sprachanalyseeinrichtung.

Zur "regulären" Steuerung des Möbelantriebs ist die Steuereinrichtung zum drahtgebundenen oder drahtlosen Empfang von Steuerbefehlen für den mindestens einen Verstellantrieb von einer Handsteuerung eingerichtet. Eine speziell Handbedieneinheit und/oder ein als eine solche eingerichtetes Mobilgerät wie z.B. ein Smartphone oder ein Tablet können so benutzt werden, um verschiedene Positionen des Möbels einzustellen.

Zusätzlich oder alternativ dazu kann die Steuereinrichtung eine Schnittstellenvorrichtung für mindestens eine externe Sprachanalyseeinrichtung aufweisen. Bevorzugt digitalisiert die Schnittstellenvorrichtung das elektrisches Signal und sendet es in Form von Daten über ein Netzwerk zur Sprachanalyse an eine externe Sprachanalyseeinrichtung, die die Daten auswertet und als Sprachinformation (z.B. in Textform) zurücksendet, woraufhin der Sprachinformation in der Steuereinrichtung ausgewertet wird und in ein Steuerkommando für den mindestens einen Verstellantrieb umgesetzt wird. Es werden auf diese Weise bereits verfügbare Sprachanalysedienste ausgenutzt, um eine komfortable Sprachsteuerung mit geringem internen Hard- und/oder Softwareaufwand zu realisieren.

Dieses kann gefahrlos umgesetzt werden, da die lokale Sprachanalyseeinrichtung z.B. mit einer durch sie sicher verfügbaren Notfallabschaltung die notwendige Betriebssicherheit unabhängig von der externen Sprachanalyse bereitstellt. Die lokale Sprachanalyseeinrichtung wirkt zu diesem Zweck mit einer Priorität auf den mindestens einen Verstellantrieb, die höher ist als die der Handsteuerung und/oder der externen Sprachanalyseeinrichtung.

Der elektromotorische Möbelantrieb kann verschiedene Betriebszustände aufweisen. Folgende Betriebszustände sind u.a. möglich: AUS-Betriebszustand, EIN-Betriebszustand, STAND-BY-Betriebszustand, NOT-AUS-Betriebszustand, NETZFREI-Betriebszustand.

Im AUS-Betriebszustand ist ein Motor/sind Motoren des Möbelantriebs ausgeschaltet, kann/können aber durch einen Betätiger in den EIN-Betriebszustand geschaltet werden. Eine Stromversorgung der Steuereinrichtung ist vorhanden.

Im EIN-Betriebszustand ist ein Motor/sind Motoren des Möbelantriebs eingeschaltet, z.B. mittels einer Handbedienung. Die Stromversorgung der Steuereinrichtung ist vorhanden.

Im STAND-BY-Betriebszustand ist die Stromversorgung der Steuereinrichtung und eventueller weiterer Übertragungseinheiten, wie z.B. Funkgateway u.dgl., auf ein Minimum herabgesetzt. Wenn der STAND-BY-Betriebszustand eingeschaltet ist, muss dieser ausgeschaltet werden, damit eine Betätigung des Möbelantriebs möglich wird. Dieses Ausschalten des STAND-BY-Betriebszustands wird auch als "Aufwecken" bezeichnet.

Im NOT-AUS-Betriebszustand ist ein Einschalten des Motors/der Motoren des Möbelantriebs nicht möglich. Wenn der NOT-AUS-Betriebszustand während des EIN-Betriebszustandes eingeschaltet wird, wird ein eingeschalteter/werden eingeschaltete Motoren sofort ausgeschaltet. Die Stromversorgung der Steuereinrichtung ist vorhanden. Der NOT-AUS-Betriebszustand wird nach Beseitigung seiner Ursache durch geeignete, hier nicht näher beschriebene Maßnahmen beendet.

Im NETZFREI-Betriebszustand ist eine Verbindung des Möbelantriebs, d.h. der Stromversorgung, zu einem Netzanschluss mittels einer Netzfreischaltvorrichtung unterbrochen. Die Netzfreischaltvorrichtung erkennt im eingeschalten NETZFREI-Betriebszustand, wenn dieser ausgeschaltet wird, d.h. eine Verbindung mit dem Netz zum Betrieb des Möbelantriebs erforderlich wird. Ebenso erkennt die Netzfreischaltvorrichtung, wenn der NETZFREI-Betriebszustand wieder eingenommen werden kann.

Es wird ein empfangenes akustisches Signal in ein elektrisches Signal umgewandelt und zur Auswertung einer lokalen Sprachanalyseeinrichtung zugeführt. Wenn bei der Auswertung ein Schlüsselwort aus einer Menge von Schlüsselwörtern erkannt wird, wird ein Betriebszustand des Möbelantriebs gesteuert, wobei dieser Betriebszustand in Abhängigkeit von einem Schlüsselwort oder mehreren ein- oder ausgeschaltet wird.

So wird in dem Verfahrensschritt Steuern eines NOT-AUS-Betriebszustands des Möbelantriebs ein Stoppen einer Bewegung des mindestens einen Verstellantriebs durchgeführt. Die lokal ausgewertete Spracheingabe dient somit einer Notabschaltung im Gefahrenfall. Das Ausrufen von bestimmten Schlüsselwörter wie "Stopp", "Halt", "Hilfe", "Aua" ist eine natürliche und sehr schnelle Reaktion im Gefahrenfall, wodurch eine sichere und zuverlässige Notabschaltung ermöglicht wird. Die lokale Auswertung bietet eine hohe Ausfallsicherheit.

Alternativ und/oder ergänzend dient die lokal ausgewertete Spracheingabe einer generellen Abschaltung. Die Abschaltung kann sich auf einzelne oder auf Gruppen von Verstellantrieben beziehen, sie kann sich aber auch auf alle an der Steuereinrichtung angeschlossene elektrische Verbraucher wie Motoren, Leuchten, Massageeinrichtungen oder Elemente zum Heizen und/oder Kühlen beziehen.

In dem Verfahrensschritt, bei dem der Schritt Steuern eines STAND-BY-Betriebszustands des Möbelantriebs ein Ein- und/oder Ausschalten eines STAND-BY-Betriebszustands einer Übertragungseinheit und/oder einer Schnittstellenvorrichtung umfasst, wird die Übertragungseinheit und/oder die Schnittstellenvorrichtung in einen Stromsparmodus geschaltet oder aus diesem "aufgeweckt".

Der Verfahrensschritt Steuern eines NETZFREI-Betriebszustands des Möbelantriebs umfasst ein Ein- und/oder Ausschalten einer Netzfreischaltung. Damit kann vorteilhaft eine Trennung des Netzes vom Möbelantrieb erfolgen.

Es wird ein empfangenes akustisches Signal in ein elektrisches Signal umgewandelt und zur Auswertung einer lokalen Sprachanalyseeinrichtung zugeführt. Wenn bei der Auswertung ein Schlüsselwort aus einer Menge von Schlüsselwörtern erkannt wird, wird eine Bewegung des mindestens einen Verstellantriebs gestoppt. Die lokal ausgewertete Spracheingabe dient somit einer Notabschaltung im Gefahrenfall. Das Ausrufen von bestimmten Schlüsselwörtern wie "Stopp", "Halt", "Hilfe", "Aua" ist eine natürliche und sehr schnelle Reaktion im Gefahrenfall, wodurch eine sichere und zuverlässige Notabschaltung ermöglicht wird. Die lokale Auswertung bietet eine hohe Ausfallsicherheit.

In einer vorteilhaften Ausgestaltung des Verfahrens ist die Menge der Schlüsselwörter vorgegeben. Sie umfasst bevorzugt weniger als 10 und insbesondere weniger als 6 Schlüsselwörter. Es hat sich gezeigt, dass trotz aller Individualität der Benutzer des Möbels bzw. Möbelantriebs sich die im Gefahrenfall ausgerufenen Ausdrücke auf die genannte kleine Anzahl von Schlüsselwörtern reduzieren lassen. Das vereinfacht die lokale Auswertung, die entsprechend mit geringem Hardwareaufwand bzw. kleiner Rechenleistung umgesetzt werden kann.

Um eine eventuell schon eingetretene Einklemmsituation zu entschärfen, ist in einer weiteren vorteilhaften Ausgestaltung des Verfahrens vorgesehen, eine Bewegung des mindestens einen Verstellantriebs nach einem Stoppen zumindest kurzzeitig umzukehren.

Es sei noch erwähnt, dass es durchaus praktikabel oder auch gewollt ist, wenn die lokale und die externe Sprachanalyseeinrichtung denselben Befehl zur Abschaltung auslösen und der Steuereinrichtung bzw. dem Möbel übermitteln. Das kann zeitversetzt erfolgen, was gegenüber dem Benutzer keine Rolle spielt. Eine Einschränkung des Bedienkomforts liegt nicht vor. Beide Systeme, die externe und die lokale Sprachanalyseeinrichtung, sind prinzipiell signaltechnisch parallel zueinander angeordnet, arbeiten autark voneinander und erzeugen somit unabhängig voneinander eine Abschaltung des wenigstens einen Motors. In diesem Sinne ergänzen sich die beiden Systeme. Da die erfindungsgemäße lokale Sprachanalyseeinrichtung auf knappere und kürzere Schlüsselwörter reaktiv ausgebildet ist, und auch die Signalwege kürzer sind, wird sie rascher den Befehl zur Abschaltung des wenigstens einen Motors ausgeben. Dafür kann die externe Sprachanalyseeinrichtung einen größeren Wortschatz und ein erweitertes Sprachverständnis aufweisen, was den Bedienkomfort in regulären Bediensituationen (d.h. nicht Not- oder Gefahrensituationen) erhöht.

In einer Variante ist die lokale Sprachanalyseeinrichtung immer nur dann aktiv, wenn ein Verstellantrieb betrieben wird. Alternativ ist die lokale Sprachanalyseeinrichtung immer aktiv und immer zur Aufnahme und Empfang eines Schlüsselwortes betriebsbereit, selbst wenn ein elektrischer Verbraucher des Möbels wie ein Verstellantrieb ausgeschaltet ist. Das Empfangen eines Schlüsselwortes unbeabsichtigt oder durch Fremdzufuhr beispielsweise als Wortfragment innerhalb eines Gespräches von Personen oder als Wiedergabe aus einem TV-Lautsprecher kann zur ungewollten Abschaltung führen. Ist der jeweilige Verstellantrieb ohnehin bereits abgeschaltet, macht sich dieser Umstand beim Benutzer nicht bemerkbar. Denn bei einem Nichtbetrieb des wenigstens einen Motors verharrt das System nicht im Betriebszustand abgeschaltet und kann jederzeit wieder in Betrieb genommen werden. Eine Entsperrung des Systems ist in solchen Situationen nicht erforderlich, da zuvor der wenigstens eine Verstellantrieb als bereits abgeschalteter Verstellantrieb detektiert ist.

Die externe Sprachanalyseeinrichtung wird bevorzugt als ein Cloud-Dienst auf einem Server innerhalb des Netzwerks ausgeführt. Die Daten können dabei mit der externen Sprachanalyseeinrichtung über eine API-Schnittstelle ausgetauscht werden.

Eine erfindungsgemäße Steuereinrichtung für einen Möbelantrieb, an die zumindest ein Verstellantrieb anschließbar ist, umfasst eine lokale Sprachanalyseeinrichtung, die zur Durchführung eines derartigen Verfahrens eingerichtet ist. Es ergeben sich die im Zusammenhang mit dem Verfahren genannten Vorteile.

In einer bevorzugten Ausführungsform wird die lokale Sprachanalyseeinrichtung in Form einer Baueinheit, ggf. bestehend aus nur einem Bauteil, realisiert. Die Baueinheit kann auf einer eigenen Leiterplatte angeordnet sein oder alternativ einen Teilbereich einer Leiterplatte der Motorsteuerung ausfüllen. Die Baueinheit kann aus mehreren elektronischen Bauteilen zusammengesetzt sein. Bevorzugt liegt die Baueinheit jedoch als Einchip-Lösung vor, wie sie auch als System On Chip (SOC) verstanden werden kann. Die Baueinheit weist Eingangsanschlüsse, Ausgangsanschlüsse und Anschlüsse zur Spannungsversorgung auf. Wenigstens ein Eingangsanschluss steht elektrisch leitend mit dem Empfänger, beispielsweise in Form eines Mikrofons, zum Empfang des akustischen Signals in Verbindung. Wenigstens ein Ausgangsanschluss steht mit einem Steuerschalter wie Relais oder Halbleiterschalter zur direkten oder indirekten Steuerung des wenigstens einen Elektromotors in Wirkverbindung. Der wenigstens eine Ausgangsanschluss kann z.B. zwei verschiede logische Zustände aufweisen, welche entweder als geschlossenen oder geöffneten Schaltzustand oder in weiterer Ausgestaltung als spannungsführender oder spannungsloser Zustand ausgebildet sind. Der letztgenannte Zustand kann auch als High- bzw. als Low-Zustand verstanden werden. Das Signal am Ausgangsanschluss setzt den jeweiligen Betriebszustand für den Möbelantrieb.

In einer besonders kompakten Ausgestaltung weist die Baueinheit neben einer Spannungsversorgung nur den genannten (ein- oder zweipoligen) Mikrofoneingang und den Steuerausgang auf. Optional kann ein Steuereingang für die Baueinheit vorgesehen sein, beispielsweise um diese in einen Anlernzustand zu versetzten, in der Schlüsselwörter angelernt werden können. Die Baueinheit ist damit sowohl kompakt und klein als auch im Hinblick auf die benötigten elektrischen Verbindungen wenig anspruchsvoll, so dass sie leicht in bestehende Schaltungsarchitekturen eingebunden werden kann.

In einer vorteilhaften Ausgestaltung weist die Steuereinrichtung eine Schnittstelle für eine externe Sprachanalyseeinrichtung auf. Es kann so unaufwändig eine komfortable und dennoch sichere Spracheingabe für den Möbelantrieb umgesetzt werden.

Bevorzugt weist die Steuereinrichtung selbst ein Mikrofon zur Umsetzung der akustischen Signale in elektrische Signale auf oder stellt einen Anschluss für ein Mikrofon bereit, wobei elektrische Signale des Mikrofons der lokalen Sprachanalyseeinrichtung und/oder der externen Sprachanalyseeinrichtung zugeführt werden. Insbesondere ein gemeinsam von der lokalen und der externen Sprachanalyseeinrichtung genutztes Mikrofon reduziert den Bauteileaufwand für die Steuereinrichtung.

In einer weiteren Ausgestaltung ist vorgesehen, dass die Steuereinrichtung mindestens ein Mikrofon aufweist, welches in eine Sprachsteuersubeinheit zusammen mit einer Sprachanalyseeinrichtung integriert ist und mit dieser eine komplette Einheit bildet. Damit ist es vorteilhaft möglich, insbesondere für die Steuerung des NOT-AUS-Betriebszustands, eine Sprachsteuersubeinheit in einfacher und kompakter Bauweise mit bedeutend geringem Platzbedarf kostengünstig allein oder auch als Redundanz mit besonders schneller Reaktion einzusetzen. Diese Sprachsteuersubeinheit kann auch für weitere Zwecke, wie z.B. Stromsparmodus, Stand-By-Betrieb, Steuern einer Netzfreischaltung verwendet werden.

Die Erfindung wird nachfolgend anhand von Ausführungsbeispielen näher erläutert. Die Figuren zeigen:
- Fig. 1: eine schematische Darstellung eines Betts mit einem Möbelantrieb und eines ersten Ausführungsbeispiels einer sprachgesteuerten Steuereinrichtung;
- Fig. 2: ein Blockschaltbild der sprachgesteuerten Steuereinrichtung für den Möbelantrieb gemäß Fig. 1;
- Fig. 3: eine schematische Darstellung des Betts mit dem Möbelantrieb nach Fig. 1 und eines zweiten Ausführungsbeispiels einer sprachgesteuerten Steuereinrichtung;
- Fig. 4: ein Blockschaltbild des zweiten Ausführungsbeispiels der sprachgesteuerten Steuereinrichtung für den Möbelantrieb gemäß Fig. 3;
- Fig. 5: ein Blockschaltbild einer ersten Variante des zweiten Ausführungsbeispiels der sprachgesteuerten Steuereinrichtung für den Möbelantrieb gemäß Fig. 3; und
- Fig. 6: ein Blockschaltbild einer zweiten Variante des zweiten Ausführungsbeispiels der sprachgesteuerten Steuereinrichtung für den Möbelantrieb gemäß Fig. 3.

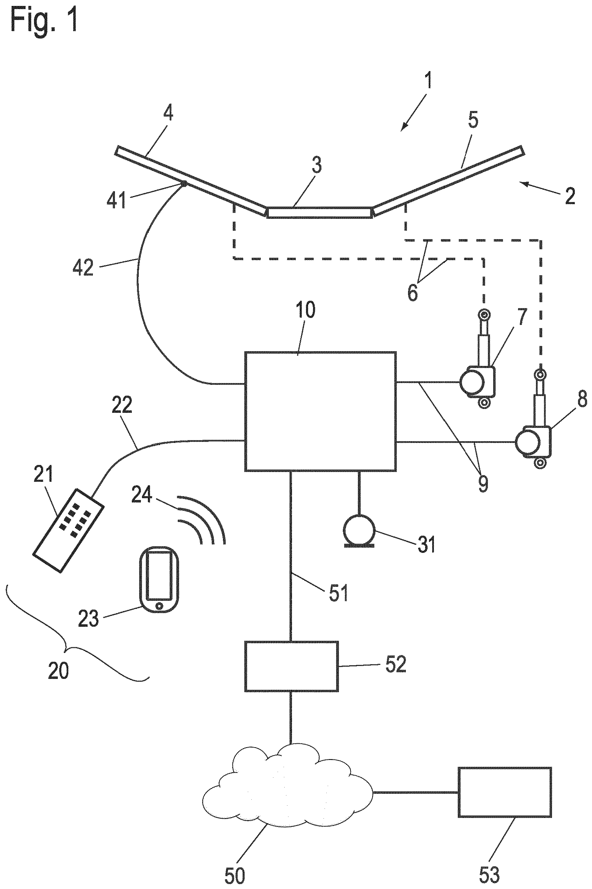

Fig. 1 zeigt ein Bett 1 als Beispiel eines Möbels mit einem elektromotorischen Möbelantrieb und eines ersten Ausführungsbeispiels einer sprachgesteuerten Steuereinrichtung 10 in einer schematischen Ansicht. Das erfindungsgemäße Verfahren kann auch in Verbindung mit einem anderen Möbel als einem Bett umgesetzt sein, beispielsweise einem Sessel und/oder einem (Hub-)Tisch.

Das Bett 1 weist wenigstens ein Stützelement 2 zur Aufnahme einer hier nicht dargestellten Matratze auf. Das Bett 1 kann als ein Einzelbett für eine Person oder auch als Doppelbett für mehrere Personen ausgelegt sein. Das Stützelement 2 ist aus mehreren plattenförmigen Teilen oder aus einem Lattenrost ausgebildet und auf ein hier nicht dargestelltes Grundelement, z.B. ein Gestell mit Füßen, aufgelegt oder montiert.

Das Stützelement 2 weist im dargestellten Beispiel ein Rückenteil 4 und ein Beinteil 5 auf, welche relativ zu einem festen Mittelteil 3 oder relativ zu dem Grundelement beweglich gelagert angeordnet sind. Diese bewegliche Anordnung ist beispielsweise mittels eines so genannten hier nicht dargestellten Bewegungsbeschlags realisiert. Die Bewegung ist verschiebbar und/oder schwenkbar ausgebildet.

Das in diesem Beispiel gezeigte Bett 1 ist mit einem elektromotorischen Möbelantrieb ausgestattet. Das beweglich gelagerte Rückenteil 4 und das Beinteil 5 sind dabei jeweils über eine nur schematisch gezeigte mechanische Verbindung 6 mit einem elektromotorischen Verstellantrieb 7, 8 gekoppelt. So ist das Rückenteil 4 mit dem elektromotorischen Verstellantrieb 7 gekoppelt. Zur Bewegung bzw. Verstellung des Beinteils 5 ist der elektromotorische Verstellantrieb 8 vorgesehen.

Die elektromotorischen Verstellantriebe 7, 8 sind vorliegend als Linearantriebe ausgebildet. Die Linearantriebe weisen einen oder eine Anzahl Elektromotoren auf, wobei jedem Motor in der Regel ein Drehzahlreduziergetriebe mit wenigstens einer Getriebestufe nachgeschaltet ist. Dem Drehzahlreduziergetriebe kann ein weiteres Getriebe, beispielsweise in Form eines Gewindespindelgetriebes, nachgeschaltet sein, welches aus der Drehbewegung des Motors eine Linearbewegung eines Abtriebsgliedes erzeugt. Das letzte Getriebeglied oder ein damit verbundenes weiteres Glied bildet das Abtriebsglied. Das Abtriebsglied des jeweiligen elektromotorischen Verstellantriebs steht mit dem jeweiligen Möbelbauteil (Rückenteil 4, Beinteil 5) oder alternativ mit einem mit dem Grundelement verbundenes Bauteil in Verbindung, so dass bei einem Betrieb des Elektromotors des jeweiligen Verstellantriebs 7, 8 die beweglichen Möbelbauteile 4, 5 relativ zueinander bzw. relativ zum Grundelement verstellt werden.

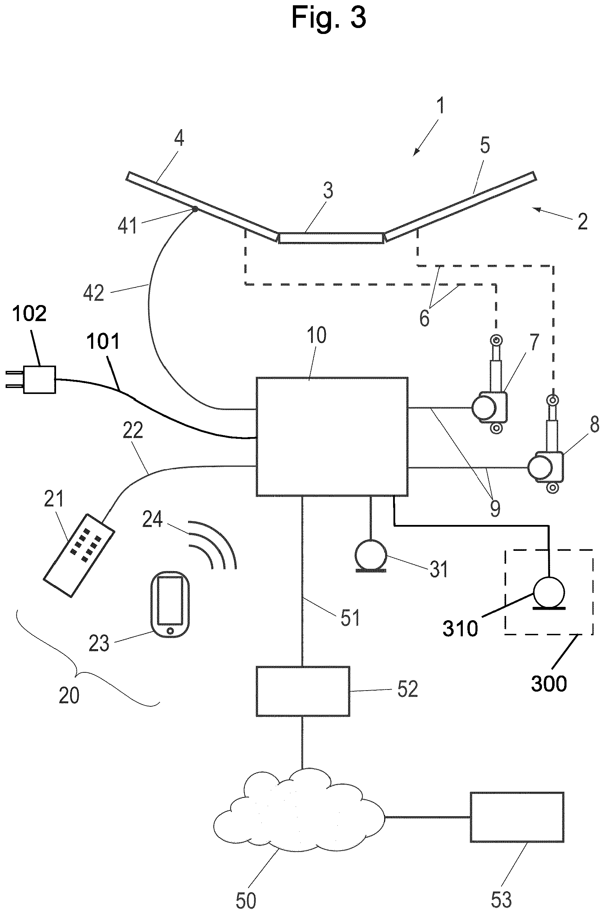

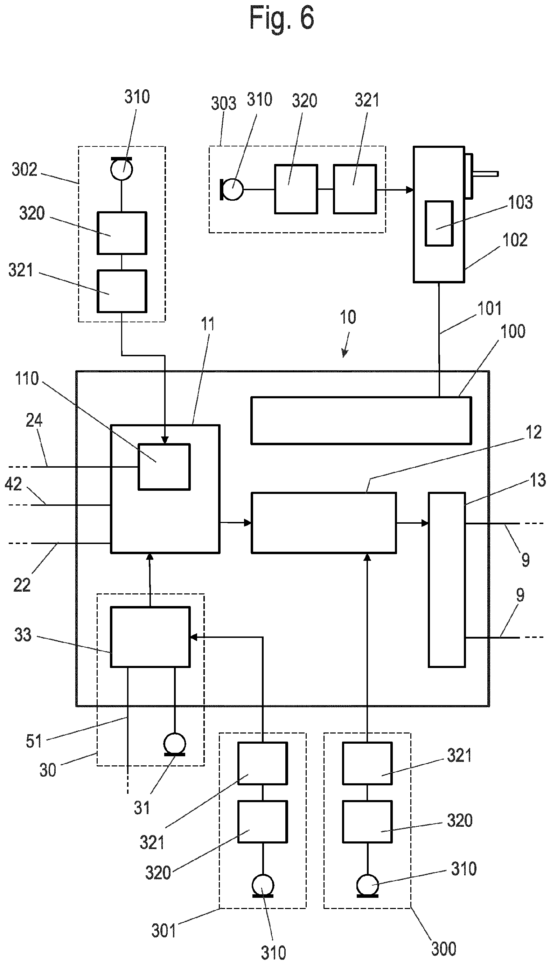

Die elektromotorischen Verstellantriebe 7, 8 sind zu ihrer Steuerung elektrisch mit einer Steuereinrichtung 10 verbunden. Diese Verbindung kann z.B. als steckbare Kabelverbindung 9 ausgeführt sein. Die Steuereinrichtung 10 weist eine elektrische Versorgungseinheit 100 (siehe Fig. 6) auf, welche die elektrische Energie, z.B. aus einem Stromversorgungsnetz, für die elektromotorischen Verstellantriebe 7, 8 bereitstellt. Dazu ist die Steuereinrichtung 10 über ein Netzkabel 101 mit einem Netzstecker 102 mit einem Netzanschluss verbindbar (siehe Fig. 3). Der Netzstecker 102 leitet über das Netzkabel 101 die eingangsseitige Netzspannung zu der elektrischen Versorgungseinheit 100 der Steuereinrichtung 10, welche sekundärseitig eine Kleinspannung in Form einer Gleichspannung abgibt.

Alternativ hierzu ist der Steuereinrichtung 10 eine externe netzabhängige Spannungsversorgung 100 mit Netzeingang/Netzstecker 102 und mit sekundärseitigem Kleinspannungsausgang vorgeschaltet, welche über die Leitung die Kleinspannung in Form einer Gleichspannung zuführt.

In einer alternativen Ausgestaltung ist die Steuereinrichtung 10 nicht oder nicht vollständig in einem separaten Gehäuse angeordnet, sondern ganz oder teilweise in einen der Verstellantriebe 7, 8 integriert. Dieser Verstellantrieb stellt dann einen Hauptantrieb dar, an den ggf. weitere Verstellantriebe angeschlossen werden können.

Der elektromotorische Möbelantrieb kann verschiedene Betriebszustände aufweisen. Folgende Betriebszustände sind u.a. möglich: AUS-Betriebszustand, EIN-Betriebszustand, STAND-BY-Betriebszustand, NOT-AUS-Betriebszustand, NETZFREI-Betriebszustand.

Im AUS-Betriebszustand ist ein Motor/sind Motoren des Möbelantriebs ausgeschaltet, kann/können aber durch einen Betätiger in den EIN-Betriebszustand geschaltet werden. Eine Stromversorgung der Steuereinrichtung 10 ist vorhanden.

Im EIN-Betriebszustand ist ein Motor/sind Motoren des Möbelantriebs eingeschaltet, z.B. mittels einer Handbedienung. Die Stromversorgung der Steuereinrichtung 10 ist vorhanden.

Im STAND-BY-Betriebszustand ist die Stromversorgung der Steuereinrichtung 10 und eventueller weiterer Übertragungseinheiten, wie z.B. Funkgateway u.dgl., auf ein Minimum herabgesetzt. Wenn der STAND-BY-Betriebszustand eingeschaltet ist, muss dieser ausgeschaltet werden, damit eine Betätigung des Möbelantriebs möglich wird. Dieses Ausschalten des STAND-BY-Betriebszustands wird auch als "Aufwecken" bezeichnet.

Im NOT-AUS-Betriebszustand ist ein Einschalten des Motors/der Motoren des Möbelantriebs nicht möglich. Wenn der NOT-AUS-Betriebszustand während des EIN-Betriebszustandes eingeschaltet wird, wird ein eingeschalteter/werden eingeschaltete Motoren sofort ausgeschaltet. Die Stromversorgung der Steuereinrichtung 10 ist vorhanden. Der NOT-AUS-Betriebszustand wird nach Beseitigung seiner Ursache durch geeignete, hier nicht näher beschriebene Maßnahmen beendet.

Im NETZFREI-Betriebszustand ist eine Verbindung des Möbelantriebs, d.h. der Stromversorgung, zu einem Netzanschluss mittels einer Netzfreischaltvorrichtung unterbrochen. Die Netzfreischaltvorrichtung erkennt im eingeschalten NETZFREI-Betriebszustand, wenn dieser ausgeschaltet wird, d.h. eine Verbindung mit dem Netz zum Betrieb des Möbelantriebs erforderlich wird. Ebenso erkennt die Netzfreischaltvorrichtung, wenn der NETZFREI-Betriebszustand wieder eingenommen werden kann.

In Fig. 1 sind zwei alternative Möglichkeiten einer Handsteuerung 20 für den Möbelantrieb dargestellt. In einer Ausgestaltung kann eine kabelgebundene Handbedieneinheit 21 vorgesehen sein, die Bedienelemente z. B. in Form von Tasten aufweist. Die Handbedieneinheit 21 kann in einer alternativen Ausgestaltung auch kabellos angebunden sein, wobei sie eine Übertragungseinrichtung für eine drahtlose Übertragung von Signalen zur Steuereinrichtung 10 aufweist. Eine Betätigung der Bedienelemente wird über das dargestellte Verbindungskabel 22 an die Steuereinrichtung 10 übertragen, die entsprechend der bedienten Elemente die Verstellantriebe 7, 8 ansteuert. Diese Ansteuerung kann bestimmten Einschränkungen unterliegen, beispielsweise können bestimmte Verstellantriebe 7, 8 oder bestimmte Verstellbereiche von einer Verstellung ausgenommen sein oder erst nach Freigabe, z. B. über ein Schlüsselschalter oder ein ähnliches übergeordnetes Element zugänglich sein. Zudem kann in den Verstellantrieben 7, 8 jeweils einer oder mehrere Endschalter angeordnet sein, die eine Bewegung über einen bzw. zwei definierte Endpunkte verhindern.

Die Handbedieneinheit 21 kann wie in der Fig. 1 dargestellt über das Verbindungskabel 22 mit der Steuereinrichtung 10 verbunden sein. Alternativ kann die Handbedieneinheit 21 mit einer Übertragungseinrichtung für eine drahtlose Übertragung von Signalen zur Steuereinrichtung 10 versehen sein. Die drahtlose Übertragung kann durch eine Funkübertragungsstrecke, eine optische Übertragungsstrecke (z.B. für Infrarotlicht) und/oder eine Ultraschallübertragungsstrecke realisiert sein, wobei die Steuereinrichtung 10 mit einer jeweiligen entsprechenden Empfangseinheit ausgerüstet ist.

Ebenfalls als eine Alternative oder zusätzlich zur Handbedieneinheit 21 kann die Handsteuerung 20 durch ein Mobilgerät 23 vorgenommen werden. Das Mobilgerät 23 kann insbesondere ein handelsübliches Mobiltelefon ("Smartphone") oder ein Tablet-Computer sein. Bevorzugt ist eine Software ("App") für die Funktion als Handbedienung auf dem Mobilgerät 23 installiert. Steuerkommandos an die Verstellantriebe 7, 8 können so über eine drahtlose Übertragungsstrecke 24 von dem als Handbedienung genutzten Mobilgerät 23 an die Steuereinrichtung 10 gesendet werden. Die drahtlose Übertragungsstrecke 24 kann beispielsweise auf einem WLAN (Wireless Lokal Area Network)- oder Bluetooth-Übertragungsweg basieren. Die Drahtlosübertragung vom Mobilgerät 21 über die drahtlose Übertragungsstrecke 24 kann unmittelbar zur Steuereinrichtung 10 erfolgen. In alternativen Ausgestaltungen ist eine Übertragung auch über einen Zugangspunkt 52 eines Netzwerks 50 möglich, mit dem die Steuereinrichtung 10 verbunden ist. Details zu dem Netzwerkzugang der Steuereinrichtung 10 werden nachfolgend noch erläutert.

Neben der Handsteuerung 20 ist bei dem Ausführungsbeispiel der Fig. 1 eine Sprachsteuerung umgesetzt, die in dem gezeigten ersten Ausführungsbeispiel ein Mikrofon 31 umfasst, das mit der Steuereinrichtung 10 verbunden ist. Über elektrische Signale des Mikrofons 31, welche die vom Mikrofon 31 empfangenen akustische Signale wiedergeben, kann ebenfalls eine Steuerung der Verstellantriebe 7, 8 und ggf. weiterer, mit der Steuereinrichtung 10 verbundener und von der Steuereinrichtung 10 gesteuerter Komponenten des Möbelantriebs erfolgen.

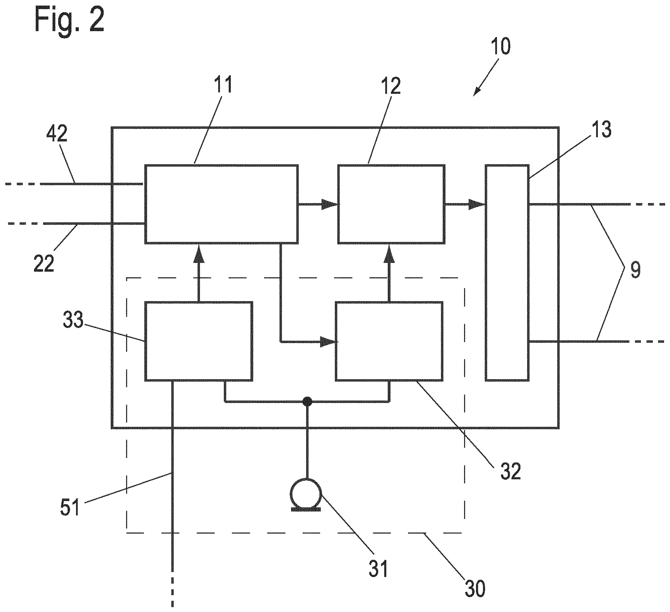

Wie im Zusammenhang mit Fig. 2 noch detaillierter ausgeführt wird, erfolgt eine Auswertung der elektrischen Signale des Mikrofons 31 teilweise in der Steuereinrichtung 10 selbst und ggf. in einer externen Sprachanalyseeinrichtung.

Um eine externe Sprachanalyseeinrichtung einsetzen zu können, ist die Steuereinrichtung 10 über einen Netzwerkanschluss 51 mit dem bereits erwähnten Zugangspunkt 52, beispielsweise einem sogenannten Router, mit dem Netzwerk 50 verbunden. Der Netzwerkanschluss 51 kann dabei drahtgebunden, z.B. über ein Ethernet-Kabel, oder auch drahtlos ausgebildet sein.

Im Netzwerk 50 bzw. über dieses Netzwerk 50 angebunden ist mindestens ein Server 53, der die externe Sprachanalyseeinrichtung umfasst. Beispielhaft ist ein einzelner derartiger Server 53 dargestellt. Es versteht sich, dass innerhalb des Netzwerks 50 eine Mehrzahl derartiger Server im Rahmen einer Cloud angeordnet sein können, wobei eine Zuteilung von Anfragen an diesen Server 53 innerhalb des Netzwerks 50 bevorzugt automatisch und für die Steuereinrichtung 10 transparent erfolgt.

Bei dem Möbelantrieb der Fig. 1 ist die Steuereinrichtung 10 zusätzlich mit einem Sensor 41 über ein Sensorkabel 42 verbunden. Ein derartiger Sensor 41 ist beispielhaft am Rückenteil 4 des Bettes 1 befestigt und dient der Erfassung von Schwingungen (Vibrationen) in einem Frequenzbereich, der sich vom Sub-Hertz (Hz)-Bereich bis in den Bereich akustischer Frequenzen, also einige 100 bis 1000 Hz erstrecken kann. Ein derartiger Sensor 41 kann beispielsweise ein piezoelektrischer oder elektromechanischer Schwingungsaufnehmer sein. Er kann, wie dargestellt an einer Rahmenkomponente des Bettes 1 befestigt sein, aber ebenso auch in eine in Fig. 1 nicht dargestellte Matratze bzw. Polsterung des Bettes integriert sein. Ein solcher Sensor 41 kann der Überwachung der Schlafqualität einer das Bett 1 nutzenden Person dienen, indem für die Schlafqualität charakteristische Schwingungen aufgenommen werden. Diese Schwingungen können durch Atmung und/oder Körperbewegungen im Schlaf hervorgerufen sein.

Beim dargestellten Beispiel erfolgt eine Auswertung der der vom Sensor 41 aufgenommenen Signale beispielsweise unmittelbar in der Steuereinrichtung 10. Auf diese Weise kann vorteilhaft eine Infrastrukturanbindung der Steuereinrichtung 10, beispielsweise über das über die Verbindung zum Netzwerk 50 auch für die Auswertung im Zusammenhang mit Signalen des Sensors 41 eingesetzt werden. Wird beispielsweise von der Steuereinrichtung 10 eine kritisehe Schlafsituation, beispielsweise ein Atemstillstand erkannt, kann ein Warnsignal über die Steuereinrichtung 10 und das Netzwerk 50 ausgegeben werden.

In Fig. 2 ist die Steuereinrichtung 10 des ersten Ausführungsbeispiels gemäß Fig. 1 detaillierter in Form eines Blockschaltbilds dargestellt. Nicht wiedergegeben ist bei diesem Blockschaltbild eine Stromversorgung für die Steuereinrichtung 10 und/oder die Verstellantriebe 7, 8. Diese ist entweder in Form eines Netzteils in die Steuereinrichtung 10 integriert, die neben den dargestellten Anschlüssen damit auch einen Netzanschluss aufweist. Beispielhaft ist hierzu weiter unten eine Versorgungseinheit 100 im Zusammenhang mit Fig. 6 angegeben. Alternativ kann auch ein externes Netzteil vorgesehen sein, dass die Steuereinrichtung 10 mit einer Niederspannung versorgt.

Die Steuereinrichtung 10 umfasst eine Auswerteeinheit 11, die im dargestellten Beispiel Signale der Handbedieneinheit 21, die über das Kabel 22 zugeführt werden, auswertet. Weiter ist die Auswerteeinheit 11 zur Auswertung von zugeführten Steuerkommandos des Mobilgeräts 23 über die Übertragungsstrecke 24 mit einer Übertragungseinheit 110 eingerichtet. Wenn die Steuereinrichtung 10 diese Steuermöglichkeit zulässt, kann in der Auswerteeinheit 11 oder verbunden mit der Auswerteeinheit 11 ein Empfänger für Signale der Übertragungsstrecke 24 angeordnet sein, beispielsweise ein Bluetooth-Empfänger. Als Beispiel eines solchen Empfängers ist in Fig. 6 eine Übertragungseinheit 110 schematisch gezeigt. Alternativ können Informationen des Mobilgeräts 23 zur Steuerung der Verstellantriebe 7, 8 auch über das Netzwerk 50 und den Netzwerkanschluss 51 an die Auswerteeinheit 11 übertragen und dort analysiert werden.

In der Regel weist die Auswerteinheit 11 einen Mikrocontroller auf, der die empfangenen Steuerkommandos für die Verstellantriebe 7, 8 auswertet. Dieser Mikrocontroller kann auch für weitere Aufgaben eingesetzt werden, beispielsweise zur Auswertung des Sensors 41. Ggf. ist ein Verstärker und/oder ein Filter für Signale des Sensors 41 in der Auswerteeinheit 11 enthalten.

Die Auswerteeinheit 11 ist beim dargestellten Beispiel über einen Freigabebaustein 12 mit einer Motorsteuerung 13 verbunden. Die Motorsteuerung 13 nimmt Anweisungen, die ein Verstellen der Verstellantriebe 7, 8 betreffen, entgegen und setzt diese in entsprechende Motorströme zum Betreiben der Verstellantriebe 7, 8 um. Die Motorsteuerung 13 kann in diesem Sinne als Leistungsendstufe der Steuereinrichtung 10 angesehen werden.

Es wird angemerkt, dass in alternativen Ausgestaltungen auch Verstellantriebe eingesetzt werden können, die die Motorsteuerung selbst integriert enthalten. In dem Fall entfällt eine entsprechende Motorsteuerung 13 in der Steuereinrichtung 10. Die Funktion des Freigabebausteins 12 wird nachfolgend erläutert.

Das bereits im Zusammenhang mit der Fig. 1 dargestellte Mikrofon 31 ist Teil einer Sprachsteuerung 30 der Steuereinrichtung 10. Diese teilt sich in zwei Zweige auf, von denen einer eine lokale Sprachanalyseeinrichtung 32 umfasst, die mit dem Freigabebaustein 12 verbunden ist. Ein weiterer Zweig umfasst eine Schnittstellenvorrichtung 33 für eine externe Sprachanalyseeinrichtung. Die Schnittstellenvorrichtung 33 ist über den erwähnten Netzwerkanschluss 51 und den Zugangspunkt 52 mit dem Netzwerk 50 verbunden und hat damit Zugang zu dem Server 53 mit der externen Sprachanalyseeinrichtung. Ein Ausgang der Schnittstellenvorrichtung 33 ist mit der Auswerteeinheit 11 gekoppelt.

Im Betrieb der Steuereinrichtung 10 werden elektrische Signale des Mikrofons 31 digitalisiert und von der Schnittstelle 33 über das Netzwerk 50 an die externe Sprachanalyseeinrichtung des Servers 53 gesendet. Die externe Sprachanalyseeinrichtung analysiert die Daten und extrahiert einen Sprachinhalt. Ein erkannter Sprachinhalt wird ebenfalls digital, z.B. in Form von Text zurückübertragen. Der Text wird von der Schnittstelle 33 ausgewertet indem auf ein Vorliegen von Anweisen für einen der Verstellantriebe 7, 8 überprüft wird. Aufgefundene Anweisungen werden an die Auswerteeinheit 11 übertragen. Eine Auswertung des Textes kann alternativ auch in dieser Auswerteeinheit erfolgen. Durch die leistungsstarke externe Sprachanalyse wird eine komfortable Möglichkeit zur Steuerung der Verstellantriebe 7, 8 und ggf. mit der Steuereinrichtung 10 verbundene Komponenten ermöglicht.

Als komfortable Sprachsteuerung ist dabei zu verstehen, dass die Sprachsteuerung 30 auf gesprochene Worte flexibel reagiert und ggf. im Hinblick auf den nutzbaren Wortschatz trainierbar und/oder erweiterbar ist. Diese Aufgabe bedarf einer hohen Rechenleistung und einem komplexen Sprachanalysesystems. Vorteilhaft nutzt die Steuereinrichtung 10 zu diesem Zweck vorhandene externe Sprachanalyseeinrichtungen, die über das Netzwerk 50 im Server 53 kontaktierbar sind. Solche Dienste werden von verschiedenen Internetanbietern als sogenannte Cloud-Dienste bereitgestellt. Es ist dabei in der Regel eine Standardisierte Netzwerkschnittstellentechnologie in Form eines API (Application Programming Interface) oder einer standardisierten Netzanfrage z. B. über das REST-Protokoll einsetzbar.

Typische gesprochene Kommandos können die Form "Rückenlehne hochfahren" oder "Beinunterstützung absenken" oder "Leseposition einnehmen" oder ähnlich aufweisen. Auch Kommandos der Form "diese Position unter dem Namen ... abspeichern" sind bei Nutzung einer leistungsfähigen Sprachanalyse denkbar. Weiter können auch werksvoreingestellte Kommandos wie "fahre in die TV Position" oder "fahre zu Zero Gravity" oder "fahre in die Liegeposition" vorgesehen sein, die mit fest voreingestellten Verstellpositionen für das Kopf- und/oder das Fußteil verknüpft sind. Die zuvor genannten Kommandos sind dabei rein beispielhafter Natur und können beliebig an die Funktionsmöglichkeiten des Betts 1 bzw. des Möbels mit dem Möbelantrieb angepasst werden. Gegebenenfalls ist vorgesehen, zunächst ein Schlüsselwort voranzustellen, das eine Weitergabe der aufgenommenen Sprache an den Server 53 aktiviert, so dass aufgenommene Signale nur an den Server 53 gesendet werden, wenn diese auch den Möbelantrieb betreffen.

Wie bereits erwähnt, werden von der Schnittstellenvorrichtung 33 an den Server 53 gesendete und dort analysierte Spracheingaben in Form von Steuerkommandos vergleichbar mit den Steuerkommandos der Handsteuerung 20 an die Auswerteeinheit 11 übertragen und von dort auf den beschriebenen Wegen in eine Bewegung der Verstellantriebe 7, 8 umgesetzt.

Signale des Mikrofons werden parallel dazu auch der lokalen Sprachanalyseeinrichtung 32 zur Verfügung gestellt. Diese dient in erster Linie der Erfassung von sicherheitsrelevanten Sprachinformationen, die lokal und damit unabhängig von der Verfügbarkeit des Netzwerks 50 ausgewertet werden.

Beispielsweise ist vorgesehen, dass die lokale Sprachanalyseeinrichtung 32 Anweisungen wie "Stopp" oder "Halt" unmittelbar erkennt oder ein Nothaltsignal an den Freigabebaustein 12 weitergibt. Dieser blockiert daraufhin ein ggf. von der Auswerteeinheit 11 empfangenes Signal zum Betreiben einer der Verstellantriebe 7, 8 und blockiert damit eine weitere Bewegung der Verstellantriebe 7, 8. Die blockierende Funktion der lokalen Sprachanalyseeinrichtung kann natürlich auch auf die Auswerteeinheit 11 wirken und dort berücksichtigt werden oder unmittelbar auf die Motorsteuerung 13 wirken und dort ein Blockieren der Verstellantriebe 7, 8 zur Folge haben. Auf diese Weise wird der Not-Aus-Betriebszustand des Möbelantriebs gesteuert.

Die Sprachsteuerung 30 ist durch die externe Sprachanalyse komfortabel, sie ist dennoch sicher, da die auf der externen Auswertung beruhenden Kommandos jederzeit durch die Notfallabschaltung durch die lokale Sprachanalyseeinrichtung 32 überschrieben werden können.

In alternativen Ausgestaltungen ist es denkbar, dass die Verstellantriebe 7, 8 nicht nur stoppen, wenn ein entsprechender Nothaltbefehl von der lokalen Sprachanalyseeinrichtung 32 ausgegeben wird, sondern stoppen und zumindest ein Stück in eine entgegengesetzte Richtung verfahren. Auf diese Weise kann eine durch den Verstellvorgang beeinträchtige Person im Bett 1 wieder in eine angenehme Position gebracht werden oder es kann ein bereits erfolgtes leichtes Einklemmen rückgängig gemacht werden.

Die lokale Sprachanalyseeinrichtung 32 kann sich dabei eines weiteren Mikrocontrollers, eines DSP (Digital Signal Processor) und/oder eines FPGA (Field Programmable Gate Array) bedienen, wobei die genannten Komponenten ggf. in Form eines SOC (System On Chip) integriert sind. Mit relativ geringem Hardwareaufwand kann auf diese Weise zumindest eine Analyse von Spracheingaben beschränkt auf einige wenige Schüsselwörter erfolgen. Das genannte Schlüsselwort "Stopp" beispielsweise ist anhand der charakteristischen Phonetik leicht und sicher identifizierbar. Neben expliziten Wörtern können auch in Zusammenhang mit Gefährdungs- oder Schmerzsituation verwendete Laute wie "Aua" oder "Aah" erkannt werden und als Zeichen, die Verstellantriebe 7, 8 zu stoppen oder rückwärts laufen zu lassen, interpretiert werden. Es wird so ein weiter erhöhtes Sicherheitsniveau erreicht.

Falls die Steuereinrichtung 10 wie im dargestellten Beispiel mit einem schwingungsaufnehmenden Sensor 41 verbunden ist, kann ein verstärktes und/oder gefiltertes Signal des Sensors 41 ebenfalls der lokalen Sprachanalyseeinrichtung 32 zugeführt und von dieser ausgewertet werden. Insbesondere da eine Auswertung in der lokalen Sprachanalyseeinrichtung 32 auf wenige charakteristische Schlüsselwörter beschränkt ist, ist auch eine nicht-optimale Signalqualität bzw. vom Frequenzübertragungsverhalten nicht optimal übertragene Sprachaufnahme durch den Sensor 41 ausreichend, um Schlüsselwörter in der Notfallsituation zu erkennen und die Verstellantriebe 7, 8 zu stoppen.

Es wird angemerkt, dass die dargestellte sprachbasierte und auf einer lokalen Sprachanalyseeinrichtung 32 basierende Notabschaltung für die Verstellantriebe 7, 8 mit weiteren Sicherheitsmaßnahmen kombiniert werden kann, um einen umfassenden Einklemmschutz zu gewährleisten. In diesem Sinne können Druck- oder Tastsensoren, die an den bewegten Bettelementen oder einem Gestell des Bettes 1 angeordnet sind, ebenfalls ausgewertet werden und auf den Freigabebaustein 12 und damit die Motorsteuerung 13 einwirken.

Wenn die Steuereinrichtung 10 mittels der Notabschaltung deaktiviert worden ist, befindet sich der Möbelantrieb in dem NOT-AUS-Betriebszustand.

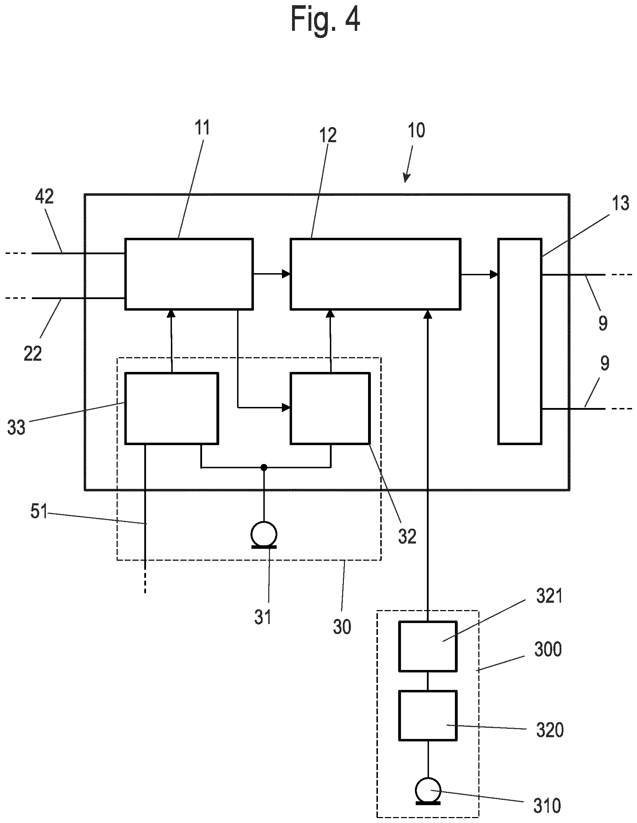

Fig. 3 zeigt eine schematische Darstellung des Betts 1 mit dem Möbelantrieb nach Fig. 1 und eines zweiten Ausführungsbeispiels einer sprachgesteuerten Steuereinrichtung 10. In Fig. 4 ist ein Blockschaltbild des zweiten Ausführungsbeispiels der sprachgesteuerten Steuereinrichtung 10 für den Möbelantrieb gemäß Fig. 3 dargestellt.

Im Unterschied zu dem ersten Ausführungsbeispiel nach Fig. 1 und 2 ist hier ein weiteres Mikrofon 310 einer Sprachsteuersubeinheit 300 vorgesehen. Diese Sprachsteuersubeinheit 300 umfasst das weitere Mikrofon 310, eine Sprachanalyseeinrichtung 320 und eine Schalteinrichtung 321.

Die Sprachsteuersubeinheit 300 ist ein sehr kleiner, vollintegrierter Baustein. Mit ihrer Spracherkennung, welche mittels der Sprachanalyseeinrichtung 320 der von dem Mikrofon 301 aufgenommenen Worte erfolgt, ist die Sprachsteuersubeinheit 300 in der Lage einzelne Wörter oder Phrasen zu erkennen. Die Sprachsteuersubeinheit 300 kann z.B. nur für spezielle Worte ausgebildet und somit besonders schnell sein.

In Abhängigkeit von erkannten Wörtern oder Phrasen (wie bereits oben beschrieben) kann mittels der Schalteinrichtung 321 ein elektrisches Signal zur Steuerung ausgegeben werden. Diese Schalteinrichtung 321 kann mit in die Sprachsteuereinheit 300 integriert (wie gezeigt) oder auch extern angeordnet sein. Sie ist z.B. als ein Halbleiterschalter oder/und elektromechanischer Kontakt (Relais) ausgebildet.

In Fig. 4 ist dargestellt, dass die Sprachsteuersubeinheit 300 parallel zu dem einen Zweig, der die mit dem Freigabebaustein 12 verbundene lokale Sprachanalyseeinrichtung 32 umfasst, angeordnet und ebenfalls mit dem Freigabebaustein 12 verbunden ist, wobei hier die Schalteinrichtung 321 der Sprachsteuersubeinheit 300 an den Freigabebaustein 12 angeschlossen ist.

Auf diese Weise ist durch die Sprachsteuersubeinheit 300 eine Redundanz des Zweigs der mit dem Freigabebaustein 12 verbundenen lokalen Sprachanalyseeinrichtung 32 gebildet. Es ergibt sich somit eine erhöhte Sicherheit zum Steuern des NOT-AUS-Betriebszustands des Möbelantriebs. Mit anderen Worten, ein Stoppen einer Bewegung des mindestens einen Verstellantriebs 7, 8 bei einem entsprechenden Schlüsselwort wird nicht nur über das Mikrofon 31 und die lokale Sprachanalyseeinrichtung 32, sondern auch gleichzeitig über das weitere Mikrofon 310 der Sprachsteuersubeinheit 300 ausgelöst.

Die Sprachsteuersubeinheit 300 erkennt wie die lokale Sprachanalyseeinrichtung 32 Anweisungen wie "Stopp" oder "Halt" unmittelbar und gibt ein Nothaltsignal an den Freigabebaustein 12 weiter.

Es ist denkbar, dass auch der Freigabebaustein 12 doppelt vorgesehen sein kann, wobei der erste Freigabebaustein mit der lokalen Sprachanalyseeinrichtung 32 verbunden ist, und der zweite Freigabebaustein an der Sprachsteuersubeinheit 300 angeschlossen ist.

Die Sprachsteuersubeinheit 300 kann aber auch an einer anderen Stelle angeschlossen sein. So ist z.B. möglich, dass die Sprachsteuersubeinheit 300 allein oder zusätzlich als ein externes Bauteil für eine Bus-Anordnung (MFP/Furnibus) ausgebildet sein kann. Weiterhin ist es denkbar, dass die Sprachsteuersubeinheit 300 allein oder zusätzlich in einen WiFi-Funkgateway eingebaut oder in die Zuleitung zu den Motoren eingeschleift ist.

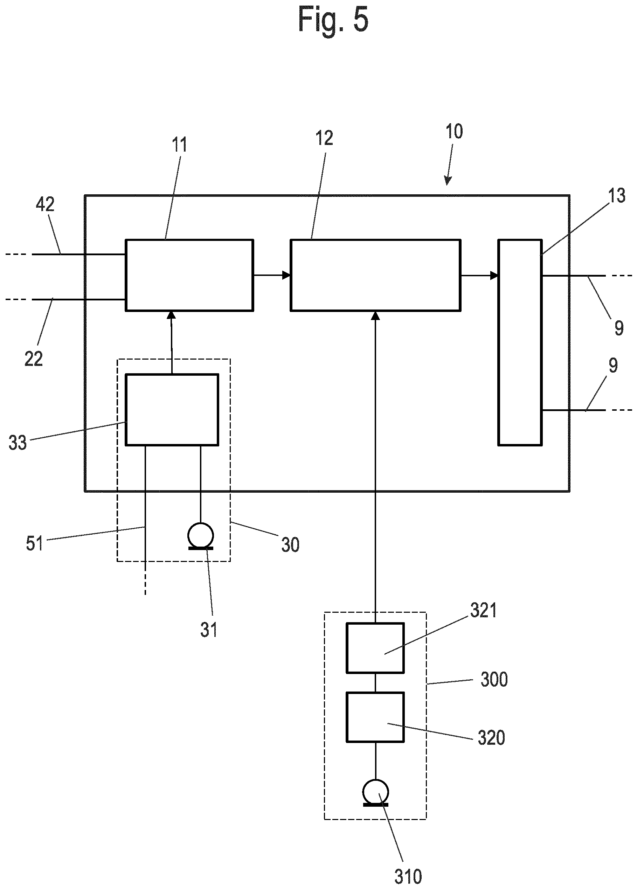

Fig. 5 stellt ein Blockschaltbild einer ersten Variante des zweiten Ausführungsbeispiels der sprachgesteuerten Steuereinrichtung 10 für den Möbelantrieb gemäß Fig. 3 dar.

In dieser Variante ist Zweig der mit dem Freigabebaustein 12 verbundenen lokalen Sprachanalyseeinrichtung 32 der Sprachsteuerung 30 nicht vorhanden. Anstelle dessen ist die Sprachsteuersubeinheit 300 vorgesehen. Natürlich können hierbei auch weitere Sprachsteuersubeinheiten 300 als redundante Sprachsteuersubeinheiten 300 parallel zu dieser oder/und an den oben bereits genannten Stellen eingebaut sein.

In Fig. 6 ist ein Blockschaltbild einer zweiten Variante des zweiten Ausführungsbeispiels der sprachgesteuerten Steuereinrichtung 10 für den Möbelantrieb gemäß Fig. 3 gezeigt.

Es wird eine beispielhafte Verwendung von vier Sprachsteuersubeinheiten 300 zusätzlich zu der Sprachsteuerung 30 mit dem Mikrofon 31 gezeigt.

Die erste Sprachsteuersubeinheit 300 ist hier wie in der ersten Variante mit der Freigabeeinheit 12 verbunden und erkennt wie die lokale Sprachanalyseeinrichtung 32 Anweisungen wie "Stopp" oder "Halt" unmittelbar und gibt ein Nothaltsignal an den Freigabebaustein 12 weiter.

Die zweite Sprachsteuersubeinheit 301 ist hier mit der Schnittstellenvorrichtung 33 der Sprachsteuerung 30 verbunden und erkennt Anweisungen wie "Stand-By EIN/AUS", "Stromsparen EIN/AUS", u.dgl. Damit steuert die zweite Sprachsteuersubeinheit 301 den STAND-BY-Betriebszustand, indem die Schnittstellenvorrichtung 33 in einen stromsparenden Modus geschaltet wird, wenn ein Schlüsselwort wie "Stand-By EIN" o.ä. erkannt wird. Der stromsparende Modus wird wieder ausgeschaltet, wenn die zweite Sprachsteuersubeinheit 301 ein Schlüsselwort wie "Stand-By AUS" oder irgendein anderes Schlüsselwort zum "Aufwecken" erkennt.

In dieser zweiten Variante ist außerdem eine Übertragungseinheit 110 in der Auswerteeinheit 11 angegeben. Die Übertragungseinheit 110 steht mit der Übertragungsstrecke 24 in Verbindung und kann z.B. ein Empfänger/Sender für eine drahtlose Übertragungsstrecke 24 sein, beispielsweise Infrarot, Ultraschall, Funk. Die Übertragungseinheit 110 ist weiterhin mit einer dritten Sprachsteuersubeinheit 302 verbunden.

Auch die dritte Sprachsteuersubeinheit 302 erkennt Anweisungen wie "Stand-By EIN/AUS", "Stromsparen EIN/AUS", u.dgl., und steuert den STAND-BY-Betriebszustand, indem sie die Übertragungseinheit 110 in einen stromsparenden Modus schaltet oder diese aus ihrem stromsparenden Modus wieder "aufweckt", wenn sie ein entsprechendes Schlüsselwort erkennt, und zurückschaltet.

In Fig. 6 ist weiterhin die Versorgungseinheit 100 innerhalb der Steuereinrichtung 10 gezeigt und über das Netzkabel 101 mit dem Netzstecker 102 zum Anschluss an ein Netz verbunden. Außerdem ist hier der Netzstecker 102 zusammen mit einer Netzfreischaltung 103 in einem Gehäuse als ein Steckernetzteil angeordnet. Die Netzfreischaltung 103 ist in dieser Variante mit einer vierten Sprachsteuersubeinheit 303 verbunden.

Mittels der Netzfreischaltung 103 kann der Möbelantrieb von einem elektrischen Stromnetz oder auch von einer Batterie-/Akkumulatorversorgung vollständig oder auch nur teilweise getrennt werden. Die Netzfreischaltung 103 erkennt mittels unterschiedlicher, hier nicht beschriebener Einrichtungen, wenn der NETZFREI-Betriebszustand umgesteuert, d.h. eingeschaltet oder ausgeschaltet werden soll. In der hier gezeigten Variante wird dies von der vierten Sprachsteuersubeinheit 303 durch ein Schlüsselwort wie z.B. "Freischalten EIN", "Netz AUS" und/oder "Freischalten AUS", "Netz EIN" u.dgl. erkannt. In Abhängigkeit von dem erkannten Schlüsselwort steuert die vierte Sprachsteuersubeinheit 303 dann den NETZFREI-Betriebszustand über die Netzfreischaltung 103.

Es ist weiterhin denkbar, dass externe komplexe Spracherkennungsmodule mit einer zusätzlichen Sprachsteuersubeinheit 300 ausgerüstet werden können.

Die Steuereinrichtung 10 des Möbelantriebs ist zusammen mit diesem in den meisten Fällen unter dem Bett angeordnet. Daher ist es erforderlich, dass das/die Mikrofon/e 31/310 der Sprachsteuerung 30/Sprachsteuersubeinheiten 300, 301, 302, 303 an einer Stelle platziert werden, an welcher sie nicht durch das Bett, Teile des Bettes oder andere Gegenstände schallisoliert sind. Aus diesem Grund können die Mikrofone 31/310 bzw. die Sprachsteuersubeinheiten 300, 301, 302, 303 außerhalb des Bettes, z.B. auf einem Nachttisch oder an einer nicht schallisolierten Stelle angeordnet und über einen Kabelanschluss oder auch drahtlos mit der Steuereinrichtung 10 in Verbindung stehen.

Eine Stromversorgung der Mikrofone 31/310 bzw. der Sprachsteuersubeinheiten 300, 301, 302, 303 kann über Batterien, Akkus oder auch kleine Netzgeräte erfolgen. Dabei können auch Steckernetzteile zur Anwendung kommen, in welche die Mikrofone 31/310 bzw. die Sprachsteuersubeinheiten 300, 301, 302, 303 integriert sind.

Weiterhin ist es möglich, dass eine so genannte Totmannschaltung zusammen mit den auf die oben beschriebene Weise platzierten Mikrofonen 31/310 bzw. Sprachsteuersubeinheiten 300, 301, 302, 303 vorgesehen ist. Hierbei werden sehr kurze Datensätze zwischen den Mikrofonen 31/310 bzw. Sprachsteuersubeinheiten 300, 301, 302, 303 und der Steuereinrichtung 10 ausgetauscht, insbesondere mittels bidirektionaler Übertragung. Die Steuereinrichtung 10 ist in diesem Fall so ausgebildet, dass sie den NOT-AUS-Betriebszustand einschaltet, wenn das Mikrofon 31/310 bzw. die oder eine spezifische der Sprachsteuersubeinheiten 300, 301, 302, 303 den Kontakt zur Steuereinrichtung 10 innerhalb eines festlegbaren Zeitabstands, z.B. 1 bis 2 s, verloren hat.

Eine Deaktivierung bzw. ein Ausschalten des NOT-AUS-Betriebszustands kann z.B. mittels einer App oder auf andere geeignete Weise ausgeführt werden.

### Bezugszeichen

- 1: Bett
- 2: Stützelement
- 3: Mittelteil
- 4: Rückenteil
- 5: Beinteil
- 6: Verbindung
- 7,8: Verstellantrieb
- 9: Verbindungskabel

- 10: Steuereinrichtung
- 11: Auswerteeinheit
- 12: Freigabebaustein
- 13: Motorsteuerung

- 20: Handsteuerung
- 21: Handbedieneinheit
- 22: Kabel
- 23: Mobilgerät
- 24: Übertragungsstrecke

- 30: Sprachsteuerung
- 31: Mikrofon
- 32: lokale Sprachanalyseeinrichtung
- 33: Schnittstellenvorrichtung für externe Sprachanalyseeinrichtung

- 41: Sensor
- 42: Sensorkabel

- 50: Netzwerk
- 51: Netzwerkanschluss
- 52: Zugangspunkt
- 53: Server mit externer Sprachanalyseeinrichtung

- 100: Versorgungseinheit
- 101: Netzkabel
- 102: Netzstecker
- 103: Netzfreischaltung

- 110: Übertragungseinheit

- 300, 301, 302, 303: Sprachsteuersubeinheit

- 310: Mikrofon
- 320: Sprachanalyseeinrichtung
- 321: Schalteinrichtung

## Patentansprüche

1. Verfahren zum Steuern eines Möbelantriebs durch eine Spracheingabe, wobei der Möbelantrieb eine Steuereinrichtung (10), an die zumindest ein Verstellantrieb (7, 8) anschließbar ist, aufweist, mit den folgenden Schritten:
- Umwandeln eines akustischen Signals in ein elektrisches Signal;
- Auswerten des elektrischen Signals durch mindestens eine lokale Sprachanalyseeinrichtung (32, 320); und
- Steuern eines Betriebszustands des Möbelantriebs, wenn bei der Auswertung ein Schlüsselwort aus einer Menge von Schlüsselwörtern erkannt wird,
**dadurch gekennzeichnet, dass**
- die Steuereinrichtung (10) zum drahtgebundenen oder drahtlosen Empfang von Steuerbefehlen für den mindestens einen Verstellantrieb (7, 8) von einer Handsteuerung (20) eingerichtet ist und/oder
- die Steuereinrichtung (10) eine Schnittstellenvorrichtung (33) für mindestens eine externe Sprachanalyseeinrichtung aufweist, und dass die mindestens eine lokale Sprachanalyseeinrichtung (32, 320) mit einer Priorität auf den mindestens einen Verstellantrieb (7, 8) wirkt, die höher ist als die der Handsteuerung (20) und/oder der externen Sprachanalyseeinrichtung.

2. Verfahren nach Anspruch 1, bei dem ein Schritt Steuern eines NOT-AUS-Betriebszustands des Möbelantriebs ein Stoppen einer Bewegung des mindestens einen Verstellantriebs (7, 8) umfasst.

3. Verfahren nach Anspruch 1 oder 2, bei dem ein Schritt Steuern eines STAND-BY-Betriebszustands des Möbelantriebs ein Ein- und/oder Ausschalten eines STAND-BY-Betriebszustands einer Übertragungseinheit (110) und/oder einer Schnittstellenvorrichtung (33) umfasst.

4. Verfahren nach einem der Ansprüche 1 bis 3, bei dem ein Schritt Steuern eines NETZFREI-Betriebszustands des Möbelantriebs ein Ein- und/oder Ausschalten einer Netzfreischaltung (103) umfasst.

5. Verfahren nach einem der Ansprüche 1 bis 4, bei dem die Menge der Schlüsselwörter vorgegeben ist.

6. Verfahren nach einem der Ansprüche 1 bis 5, bei dem die Menge der Schlüsselwörter weniger als 10 und insbesondere weniger als 6 Schlüsselwörter umfasst.

7. Verfahren nach einem der Ansprüche 2 bis 6, bei dem eine Bewegung des mindestens einen Verstellantriebs (7, 8) nach einem Stoppen zumindest kurzzeitig umgekehrt wird.

8. Verfahren nach einem der Ansprüche 1 bis 7, bei dem die Schnittstellenvorrichtung (33) das elektrisches Signal digitalisiert und in Form von Daten über ein Netzwerk (50) zur Sprachanalyse an einen externe Sprachanalyseeinrichtung sendet, die die Daten auswertet und als Sprachinformation zurücksendet, woraufhin die Sprachinformation in der Steuereinrichtung (10) ausgewertet wird und in ein Steuerkommando für den mindestens einen Verstellantrieb (7, 8) umgesetzt wird.

9. Verfahren nach Anspruch 8, bei dem die externe Sprachanalyseeinrichtung als ein Cloud-Dienst auf einem Server (53) ausgeführt wird.

10. Verfahren nach Anspruch 9, bei dem die Daten mit der externen Sprachanalyseeinrichtung über eine API-Schnittstelle ausgetauscht werden.

11. Steuereinrichtung (10) für einen Möbelantrieb, an die zumindest ein Verstellantrieb (7, 8) anschließbar ist, **dadurch gekennzeichnet, dass** die Steuereinrichtung (10) mindestens eine lokale Sprachanalyseeinrichtung und eine Schnittstellenvorrichtung (33) für mindestens eine externe Sprachanalyseeinrichtung umfasst, wobei die Steuereinrichtung zur Durchführung eines Verfahrens gemäß einem der Ansprüche 1 bis 10 eingerichtet ist.

12. Steuereinrichtung (10) nach Anspruch 11, aufweisend mindestens ein Mikrofon (31, 310) oder einen Anschluss für mindestens ein Mikrofon (31, 310), wobei elektrische Signale des mindestens einen Mikrofons (31, 310) der mindestens einen lokalen Sprachanalyseeinrichtung (32, 320) und/oder der externen Sprachanalyseeinrichtung zugeführt werden.

13. Steuereinrichtung (10) nach einem der Ansprüche 11 oder 12, aufweisend mindestens ein Mikrofon (310), welches in eine Sprachsteuersubeinheit (300) zusammen mit einer Sprachanalyseeinrichtung (320) integriert ist und mit dieser eine komplette Einheit bildet.

## Claims

1. Method for controlling a furniture drive by means of a voice input, wherein the furniture drive has a control device (10) to which at least one adjustment drive (7, 8) can be connected, comprising the following steps:
- converting an acoustic signal into an electrical signal;
- evaluating the electrical signal by at least one local voice analysis device (32, 320); and
- controlling an operating state of the furniture drive if a keyword from a set of keywords is recognized during evaluation,
**characterized in, that**
- the control device (10) is set up for the wired or wireless reception of control commands for the at least one adjustment drive (7, 8) from a manual control (20) and/or
- the control device (10) has an interface device (33) for at least one external voice analysis device
and that
the at least one local voice analysis device (32, 320) acts on the at least one adjustment drive (7, 8) with a priority which is higher than that of the manual control (20) and/or the external voice analysis device.

2. Method according to claim 1, in which a step of controlling an EMERGENCY STOP operating state of the furniture drive comprises stopping a movement of the at least one adjustment drive (7, 8).

3. Method according to claim 1 or 2, in which a step of controlling a STAND-BY operating state of the furniture drive comprises switching on and/or off a STAND-BY operating state of a transmission unit (110) and/or an interface device (33).

4. Method according to one of claims 1 to 3, in which a step of controlling a MAINS CUT-OFF operating state of the furniture drive comprises activating and/or deactivating a mains cut-off (103).

5. Method according to one of claims 1 to 4, in which the set of keywords is predetermined.

6. Method according to one of the claims 1 to 5, in which the set of keywords comprises less than 10 and in particular less than 6 keywords.

7. Method according to one of claims 2 to 6, in which a movement of the at least one adjustment drive (7, 8) is reversed at least briefly after stopping.

8. Method according to one of claims 1 to 7, in which the interface device (33) digitizes the electrical signal and transmits it in the form of data via a network (50) for voice analysis to an external voice analysis device which evaluates the data and sends it back as voice information, whereupon the voice information is evaluated in the control device (10) and is converted into a control command for the at least one adjustment drive (7, 8).

9. Method according to claim 8, in which the external voice analysis device is executed as a cloud service on a server (53).

10. Method according to claim 9, in which the data are exchanged with the external voice analysis device via an API interface.

11. Control device (10) for a furniture drive, to which at least one adjustment drive (7, 8) can be connected, **characterized in that** the control device (10) comprises at least one local voice analysis device and an interface device (33) for at least one an external voice analysis device, wherein the control device is set up to carry out a method according to one of claims 1 to 10.

12. Control device (10) according to claim 11, comprising at least one microphone (31, 310) or a connection for at least one microphone (31, 310), wherein electrical signals of the at least one microphone (31, 310) are supplied to the at least one local voice analysis device (32, 320) and/or the external voice analysis device.

13. Control device (10) according to one of claims 11 or 12, comprising at least one microphone (310) which is integrated into a voice control subunit (300) together with a voice analysis device (320) and forms a complete unit therewith.

## Revendications

1. Procédé de commande d'un entraînement de meuble par une entrée vocale, l'entraînement de meuble présentant un moyen de commande (10) auquel peut être raccordé au moins un entraînement de réglage (7, 8), comprenant les étapes suivantes :
- conversion d'un signal acoustique en un signal électrique ;
- évaluation du signal électrique par au moins un moyen d'analyse vocale local (32, 320) ; et
- commande d'un état de fonctionnement de l'entraînement du meuble si, lors de l'évaluation, un mot clé est reconnu parmi un ensemble de mots clés,
**caractérisé en ce que**
- le moyen de commande (10) est conçu pour recevoir par fil ou sans fil des instructions de commande pour ledit au moins un entraînement de réglage (7, 8) d'une commande manuelle (20) et/ou
- le moyen de commande (10) présente un dispositif d'interface (33) pour au moins un moyen d'analyse vocale externe,
et **en ce que**
ledit au moins un moyen d'analyse vocale local (32, 320) agit sur ledit au moins un entraînement de réglage (7, 8) avec une priorité qui est supérieure à celle de la commande manuelle (20) et/ou du moyen d'analyse vocale externe.

2. Procédé selon la revendication 1, dans lequel une étape de commande d'un état de fonctionnement ARRÊT D'URGENCE de l'entraînement de meuble comprend un arrêt d'un mouvement dudit au moins un entraînement de réglage (7, 8).

3. Procédé selon la revendication 1 ou 2, dans lequel une étape de commande d'un état de fonctionnement STAND-BY de l'entraînement de meuble comprend l'activation et/ou la désactivation d'un état de fonctionnement STAND-BY d'une unité de transmission (110) et/ou d'un dispositif d'interface (33).

4. Procédé selon l'une des revendications 1 à 3, dans lequel une étape de commande d'un état de fonctionnement HORS RÉSEAU de l'entraînement du meuble comprend l'activation et/ou la désactivation d'une mise hors réseau (103).

5. Procédé selon l'une des revendications 1 à 4, dans lequel l'ensemble des mots clés est prédéfini.

6. Procédé selon l'une des revendications 1 à 5, dans lequel l'ensemble des mots clés comprend moins de 10 mots clés et en particulier moins de 6 mots clés.

7. Procédé selon l'une des revendications 2 à 6, dans lequel un mouvement dudit au moins un entraînement de réglage (7, 8) est inversé au moins brièvement après un arrêt.

8. Procédé selon l'une des revendications 1 à 7, dans lequel le dispositif d'interface (33) numérise le signal électrique et l'envoie sous forme de données via un réseau (50) pour analyse vocale à un moyen d'analyse vocale externe qui évalue les données et les renvoie sous forme d'information vocale, après quoi l'information vocale est évaluée dans le moyen de commande (10) et convertie en une instruction de commande pour ledit au moins un entraînement de réglage (7, 8).

9. Procédé selon la revendication 8, dans lequel le moyen d'analyse vocale externe est exécuté sous la forme d'un service cloud sur un serveur (53).

10. Procédé selon la revendication 9, dans lequel les données sont échangées avec le moyen d'analyse vocale externe via une interface API.

11. Moyen de commande (10) pour un entraînement de meuble, auquel peut être raccordé au moins un entraînement de réglage (7, 8), **caractérisé en ce que** le moyen de commande (10) comprend au moins un moyen d'analyse vocale local et un dispositif d'interface (33) pour au moins un moyen d'analyse vocale externe, le moyen de commande étant conçu pour mettre en œuvre un procédé selon l'une des revendications 1 à 10.

12. Moyen de commande (10) selon la revendication 11, présentant au moins un microphone (31, 310) ou un raccordement pour au moins un microphone (31, 310), des signaux électriques dudit au moins un microphone (31, 310) étant amenés audit au moins un moyen d'analyse vocale local (32, 320) et/ou au moyen d'analyse vocale externe.

13. Moyen de commande (10) selon l'une des revendications 11 ou 12, présentant au moins un microphone (310) qui est intégré dans une sous-unité de commande vocale (300) conjointement avec un moyen d'analyse vocale (320) et forme avec celui-ci une unité complète.
